# EUROPÄISCHE PATENTSCHRIFT

(11) **EP 2 131 307 B1**
(45) Veröffentlichungstag und Bekanntmachung des Hinweises auf die Patenterteilung: **05.12.2012**
(21) Anmeldenummer: 09159840.9
(22) Anmeldetag: 11.05.2009
(51) Int. Cl.: G06K 9/00, G06T 7/00, G06K 9/62

(54) **Verfahren zur Segmentierung von Fingerabdruckbildern**
Method for segmenting fingerprint images
Procédé de segmentation d'images d'empreintes digitales

(30) Priorität: 27.05.2008 DE 102008025213
(43) Veröffentlichungstag der Anmeldung: 09.12.2009
(73) Patentinhaber: Siemens IT Solutions and Services GmbH, 1210 Wien (AT)
(72) Erfinder: Birchbauer, Josef Alois, 8054 Seiersberg (AT); Frühstück, Bernhard, 8020 Graz (AT); Hödl, Robert, 8020 Graz (AT); Marius, Wolfgang, Dr., 8043 Graz (AT); Schneider, Wolfgang, 8010 Graz (AT)
(74) Vertreter: Patentanwaltskanzlei WILHELM & BECK

(56) Entgegenhaltungen:
- US-A1- 2002 077 537
- US-B1- 6 771 818
- US-B1- 6 836 554
- AREEKUL V. ET AL: "The New Focal Point Localization Algorithm for Fingerprint Registration" PROC. 18TH INT. CONF. ON PATTERN RECOGNITION (ICPR'06), 2006, Seiten 497-500, XP002534179
- RERKRAI K ET AL: "A new reference point for fingerprint recognition" IMAGE PROCESSING, 2000. PROCEEDINGS. 2000 INTERNATIONAL CONFERENCE ON SEPTEMBER 10-13, 2000, IEEE, PISCATAWAY, NJ, USA, Bd. 2, 10. September 2000 (2000-09-10), Seiten 499-502, XP010530032 ISBN: 978-0-7803-6297-0
- AREEKUL V ET AL: "Fast focal point localization algorithm for fingerprint registration" INDUSTRIAL ELECTRONICS AND APPLICATIONS, 2008. ICIEA 2008. 3RD IEEE CONFERENCE ON, IEEE, PISCATAWAY, NJ, USA, 3. Juni 2008 (2008-06-03), Seiten 2089-2094, XP031294096 ISBN: 978-1-4244-1717-9

## Beschreibung

In den sogenannten Automatisierten Fingerabdruckidentifizierungssystemen (AFIS) werden zu jeder erfassten Person 14 Fingerabdruckbilder gespeichert. Diese umfassen gerollte Aufnahmen von jedem einzelnen Finger, sowie sogenannte 4-4-2 Slap Impressions, d.h. Aufnahmen , bei denen die Finger nur aufgelegt, nicht aber gerollt werden, und die daher nur einen vergleichsweise kleineren Fingerabdruck erfassen. Es sind dies eine Aufnahme von 4 Fingern der linken Hand (ohne Daumen), eine Aufnahme von 4 Fingern der rechten Hand, sowie Aufnahmen der beiden Daumen.

Bei den Aufnahmen von mehreren Fingern müssen aus dem Gesamtbild die für einen automatischen Identifikationsvorgang wesentlichen Fingerbeeren mit ihrem charakteristischen, durch die Papillarlinien gebildeten Bildmuster lokalisiert, segmentiert und einem bestimmten Finger zugeordnet werden.

Dazu ist aus der US 7,072,496 ein Verfahren bekannt, bei dem durch Verringerung der Bildauflösung und Binarisierung der Grauwerte ein Schwarz-Weissbild geschaffen wird, in dem die erfassten Fingerelemente als schwarze Flächen dargestellt sind. Die Lokalisierung und Segmentierung der Fingerbeeren erfolgt auf Basis des Schwarz-Weissbildes.

In "The New Focal Point Localization Algorithm for Fingerprint Registration", Areekul et. al, Proc. 18th Int. Conf. on Pattern Recognition (ICPR'06), 2006, Seiten 497-500, wird vorgeschlagen, als Referenzpunkt für die Erfassung eines Fingerabdrucks einen Fokuspunkt zu verwenden, der ein mittleres Zentrum der Krümmungen der Linien des Fingerabdrucks repräsentiert.

Der Erfindung liegt die Aufgabe zugrunde, die Bestimmung der Zentren der erfassten Fingerelemente zu verbessern.

Diese Aufgabe wird erfindungsgemäss gelöst mit einem Verfahren zur Segmentierung von Fingerabdruckbildern, bei dem zur Lokalisierung der Zentren von erfassten Fingerelementen ein Mean-Shift-Verfahren zur Ermittlung von lokalen Maxima Verteilungsdichten angewendet wird, und bei dem aus den solcherart ermittelten lokalen Maxima von Verteilungsdichten in einem iterativen Prozess die Zentren der erfassten Fingerelemente ermittelt werden.

Das Mean-Shift-Verfahren ist eine bewährte Methode zur Ermittlung von Verteilungsdichte-Maxima. Es zeichnet sich durch vergleichsweise geringen Rechenaufwand bei guten Ergebnissen aus. Beschrieben ist es beispielsweise in "Y.Ukrainitz, B. Sarel; Mean Shift, Theory and Applications; www.wisdom.weizmann.ac.il/deniss/vision_spring04/files/mean_ shift/mean_shift.ppt.

Das Verteilungsdichte-Maximum nähert sich dem Zentrum der Fingerabdruckbeere auch wenn diese fragmentiert ist, d.h. in mehrere Teile zerfällt wie etwa bei ungleichmässigem Kontakt mit der Sensorfläche. Dies ist ein wesentlicher erfindungsgemässer Vorteil gegenüber blob-basierten Ansätzen.

Die Kernelgrösse wird zudem in der ungefähren durchschnittlichen Grösse einer Fingerdruckbeere angesetzt, sodass ein Hängenbleiben in lokalen Maxima (etwa durch die "Welligkeit" der Fingerabdrucklinien) weitgehend ausgeschlossen wird.

Die mit dem Mean-Shift-Verfahren bestimmten Zentren dienen als Ausgangspunkte ("Seed-Points") für die nachfolgende Segmentierung zur Approximation der Umgebungen durch eine die Fingerabdruckbeere generalisierende geometrische Form.

Vorteilhaft ist es, wenn rund um die Zentren der erfassten Fingerelemente Ellipsoide bestimmt werden, die jeweils ein Segment eines erfassten Fingerelementes begrenzen und wenn zur Ermittlung des Ellipsoides die Eigenvektoren und Eigenwerte einer Kovarianz-Matrix der Bildwerte in einem Kreis um das jeweilige Zentrum herangezogen werden.

Als Startpositionen für die einzelnen Ermittlungsvorgänge sind die Punkte eines gleichmässig über das Fingerabdruckbild gelegten Rasters vorgesehen und der Rasterabstand entspricht annähernd dem Radius des gewählten Kernelfensters des Mean-Shift-Verfahrens.

Zur Ermittlung der Zentren der erfassten Fingerelemente als Eingangsgrössen für das Mean-Shift-Verfahren dienen die in einem jeweils zuvor erfolgten Durchgang ermittelten lokalen Maxima von Verteilungsdichten.

Eine vorteilhafte Vorrichtung zur Durchführung der Verfahren umfasst Mittel zu Speicherung digitalisierter Fingerabdruckbilder, Rechenmittel zur Durchführung eines Mean-Shift-Verfahrens und Mittel zur Speicherung der Ergebnisse und Zwischenergebnisse des Verfahrens.

Die Erfindung wird anhand einer Figur näher erläutert, welche beispielhaft die Anwendung des erfindungsgemässen Verfahrens und die damit erzielten Ergebnisse bei unterschiedlichen Fingerabdruckbildern zeigt.

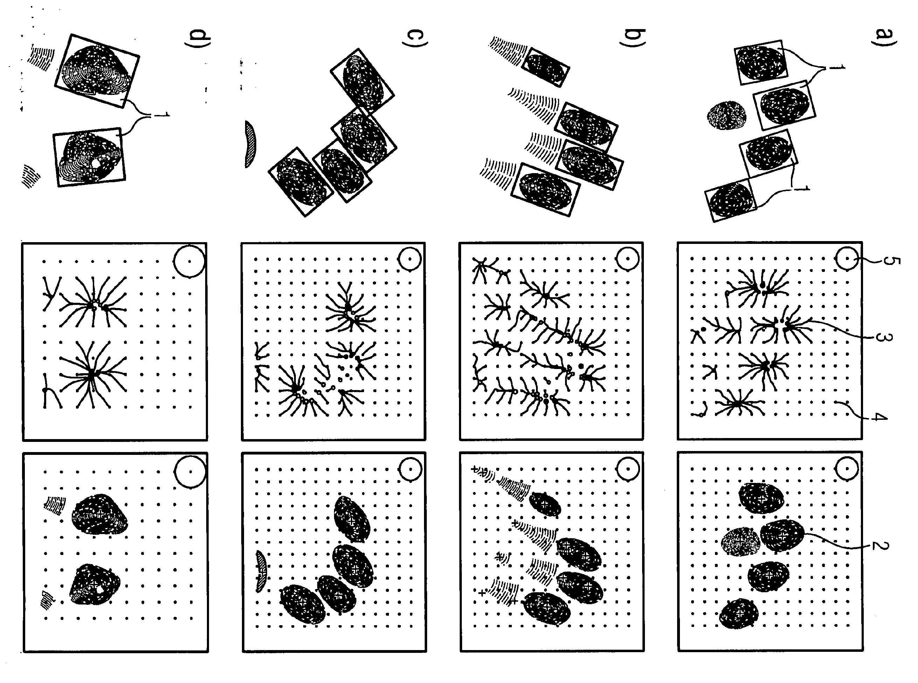

Die Figur zeigt in Abschnitt A in der linken Spalte die Aufnahme der 4 Finger einer rechten Hand. Für den weiteren Verarbeitungsvorgang, insbesondere für die Aufnahme in ein sogenanntes Automatisiertes Fingerabdruckidentifizierungssystemen (AFIS) ist es notwendig, die Position und Orientierung der einzelnen Fingerbeeren, d.h. der Fingerelemente mit der für einen Identifikationsvorgang wesentlichen weil charakteristischen, durch die Papillarlinien gebildeten Bildmuster, zu bestimmen und einem bestimmten Finger zuzuordnen. Der Erfindung liegt nun die Aufgabe der Lokalisierung der Fingerbeeren zugrunde.

Dazu wird nun erfindungsgemäss über das Fingerabdruckbild ein Raster 4 gelegt, dessen Abstände deutlich geringer sind, als die Abmessungen eines typischen Abdruckes einer Fingerbeere.

Ausgehend von jedem einzelnen Rasterpunkt wird nun ein Mean-Shift-Verfahren zur Ermittlung von lokalen Maxima 3 von Grauwert-Verteilungsdichten angewendet, wobei der Radius des gewählten Kernelfensters 5 dem Rasterabstand entspricht.

Alternativ dazu könnte das Fingerabdruckbild in einem Vorverarbeitungsschritt binarisiert werden und mit dem Mean-Shift-Verfahren ein Maximum der binarisierten Bildpunkte, also ein Häufungspunkt ermittelt werden.

Beim Mean-Shift-Verfahren wird, vereinfacht ausgedrückt, in einem ersten Verfahrensschritt innerhalb des kreisförmigen Kernelfensters 5 mit dem vorgegebenen Radius ein Dichtezentrum und ein Helligkeitsmass berechnet. Liegt das Dichtezentrum abseits des Kreismittelpunktes des Kernelfensters, dann wird der Kreismittelpunkt in diesen Punkt verschoben und der Berechnungsvorgang wird wiederholt. Dies wird so oft wiederholt, bis ein Punkt erreicht ist, in dem Kreismittelpunkt und Dichtezentrum stabil zusammenfallen. Mit anderen Worten, die Kreismittelpunkte des Kernelfensters des Mean-Shift-Verfahrens wandern von einem Startpunkt zu einem Punkt mit einem lokalen Maxima von Verteilungsdichten. In der mittleren Spalte der Figur ist diese Wanderung der Kreismittelpunkte von den als Startpunkten festgelegten Rasterpunkten zu den jeweiligen lokalen Maxima 3 dargestellt.

Aus den Endpunkten der Wanderungen, den lokalen Maxima 3 von Verteilungsdichten werden in einem weiteren iterativen Prozess die Zentren 2 der erfassten Fingerelemente 1 ermittelt.

Dies kann entsprechend einer bevorzugten Ausführungsform der Erfindung beispielsweise dadurch geschehen, dass auf das Bild der bereits ermittelten lokalen Maxima 3 von Verteilungsdichten wiederum das Mean-Shift-Verfahren angewendet wird und solcherart ein Maximum "2.Ordnung" ermittelt wird und dieser Vorgang solange wiederholt wird, bis die Zahl der Maxima in einem vorgegebenen Bereich liegt.

Nach einer alternativen Ausführungsform kann die Ermittlung der Zentren 2 der erfassten Fingerelemente 1 in der Weise erfolgen, dass iterativ aus den ermittelten lokalen Maxima 3 von Verteilungsdichten dasjenige ausgewählt wird, welches in seiner Umgebung die höchste Anzahl von weiteren lokalen Maxima aufweist und aus dieser Gruppe von lokalen Maxima ein neues Maximum ermittelt wird. Dieses ersetzt die Gruppe von lokalen Maxima. Der Vorgang wird ebenfalls iterativ solange fortgesetzt, bis keines der Maxima in seiner Umgebung mehr als eine vorgegebene Anzahl von weiteren Maxima aufweist.

## Patentansprüche

1. Verfahren zur Segmentierung von Fingerabdruckbildern, **dadurch gekennzeichnet, dass**
- zur Lokalisierung der Zentren (2) von erfassten Fingerelementen (1) in einem Fingerabdruckbild ein Mean-Shift-Verfahren zur Ermittlung von lokalen Maxima von Verteilungsdichten (3) angewendet wird,
- wobei als Startpositionen für die einzelnen Ermittlungsvorgänge die Punkte eines über das Fingerabdruckbild gelegten Rasters (4) vorgesehen sind und der Rasterabstand annähernd dem Radius des gewählten Kernelfensters des Mean-Shift-Verfahrens entspricht,
- dass das Mean-Shift-Verfahren so oft erneut auf den im jeweils zuvor erfolgten Durchgang ermittelten lokalen Maxima von Verteilungsdichten duchgeführt wird, bis die Zahl der lokalen Maxima in einem vorgegebenen Bereich liegt, und so die Zentren (2) der erfassten Fingerelemente (1) ermittelt werden, und
- dass diese Zentren als Ausgangspunkte für die Segmentierung des Fingerabdruckbildes dienen.

2. Verfahren nach Anspruch 1, **dadurch gekennzeichnet, dass** rund um die Zentren der erfassten Fingerelemente Ellipsoide bestimmt werden, die jeweils ein Segment eines erfassten Fingerelementes begrenzen und dass zur Ermittlung des Ellipsoides die Eigenvektoren und Eigenwerte einer Kovarianz-Matrix der Bildwerte in einem Kreis um das jeweilige Zentrum herangezogen werden.

3. Vorrichtung zur Durchführung eines der Verfahren nach einem der Ansprüche 1 oder 2, **dadurch gekennzeichnet, dass** Mittel zu Speicherung digitalisierter Fingerabdruckbilder, Rechenmittel zur Durchführung eines Mean-Shift-Verfahrens und Mittel zur Speicherung der Ergebnisse und Zwischenergebnisse des Verfahrens vorgesehen sind.

## Claims

1. Method for segmenting fingerprint images, **characterized in that**
- a mean shift method for determining local maxima of distribution densities (3) is applied in order to localize the centres (2) of detected finger elements (1) in a fingerprint image,
- the points of a raster (4) laid over the fingerprint image being provided as starting positions for the individual determination procedures, and the raster spacing corresponding approximately to the radius of the selected core window of the mean shift method,
- **in that** the mean shift method is repeatedly carried out on the local maxima, determined in the respectively previously performed execution, of distribution densities until the number of the local maxima lies in a prescribed range, and thus the centres (2) of the detected finger elements (1) are determined, and
- **in that** these centres serve as starting points for the segmentation of the fingerprint image.

2. Method according to Claim 1, **characterized in that** ellipsoids which respectively delimit a segment of a detected finger element are determined around the centres of the detected finger elements, and **in that** the eigenvectors and eigenvalues of a covariance matrix of the image values in a circle around the respective centre are used in order to determine the ellipsoid.

3. Device for carrying out one of the methods according to either of Claims 1 and 2, **characterized by** provision of means for storing digitized fingerprint images, computing means for carrying out a mean shift method, and means for storing the results and intermediate results of the method.

## Revendications

1. Procédé de segmentation d'images d'empreintes digitales, **caractérisé en ce que**
- pour localiser les centres (2) d'éléments de doigts (1) détectés dans une image d'empreinte digitale, on utilise un procédé de décalage de la moyenne pour déterminer des maxima locaux de densités de distribution (3),
- dans lequel on utilise en tant que positions de départ des processus de détermination individuels, les points d'une grille (4) appliquée sur l'image d'empreinte digitale et le pas de la grille correspond approximativement au rayon de la fenêtre sélectionnée du noyau du procédé de décalage de la moyenne,
- **en ce que** le procédé de décalage de la moyenne est renouvelé sur les maxima locaux déterminés des densités de distribution lors du processus respectif précédemment exécuté jusqu'à ce que le nombre de maxima locaux se situe dans une plage prédéterminée pour ainsi obtenir les centres (2) des éléments de doigts détectés (1), et
- **en ce que** ces centres sont utilisés en tant que points de départ de la segmentation de l'image d'empreinte digitale.

2. Procédé selon la revendication 1, **caractérisé en ce qu'**on détermine autour des centres des éléments de doigts détectés des ellipsoïdes qui délimitent respectivement un segment d'un élément de doigts détecté et **en ce que**, pour déterminer l'ellipsoïde, on utilise les vecteurs propres et les valeurs propres d'une matrice de covariance des valeurs d'images dans un cercle entourant le centre respectif.

3. Dispositif destiné à mettre en oeuvre un procédé selon l'une quelconque des revendications 1 ou 2, **caractérisé en ce qu'**on utilise des moyens destinés à stocker des images d'empreintes digitales numérisées, des moyens de calcul destinés à mettre en oeuvre le procédé de décalage de la moyenne et des moyens destinés à stocker les résultats et les résultats intermédiaires du procédé.
